# EUROPÄISCHE PATENTANMELDUNG

(11) **EP 3 124 761 A1**
(43) Veröffentlichungstag der Anmeldung: **01.02.2017**
(21) Anmeldenummer: 16170548.8
(22) Anmeldetag: 20.05.2016
(51) Int. Cl.: F01M 1/02, F01D 25/34

(54) **TURBINENANLAGE**

(30) Priorität: 28.07.2015 DE 102015214270
(71) Anmelder: Siemens Aktiengesellschaft, 80333 München (DE)
(72) Erfinder: Geist, Richard, 91207 Lauf (DE)

(57) **Zusammenfassung**

Die Erfindung betrifft eine Turbinenanlage, umfassend wenigstens eine direkt betriebene Hauptölpumpe (8) zur Versorgung der Turbinenanlage mit einer Schmierölmenge während des Betriebs der Turbinenanlage, sowie einer elektrischen Hilfsölpumpe (9) zur Versorgung der Turbinenanlage mit einer Schmierölmenge während des An- und Abfahrens der Turbinenanlage. Die Hauptölpumpe (8) ist mittels der elektrischen Hilfsölpumpe (9) während des An- und Abfahrens der Turbinenanlage mit Schmieröl beaufschlagbar. Der Schmieröldruck der von der elektrischen Hilfsölpumpe (9) erzeugt wird, ist dabei so groß, dass die Hauptölpumpe (8) ein Drehmoment auf eine Turbinenwelle (4) der Turbinenanlage übertragen kann, welches zum Drehen der Turbinenwelle (4) ausreicht. Auf eine zusätzliche Rotordrehvorrichtung kann daher verzichtet werden.

## Beschreibung

Die Erfindung betrifft eine Turbinenanlage nach den Merkmalen des unabhängigen Patentanspruchs 1.

Eine Turbinenanlage umfasst neben der eigentlichen Kernturbine verschiedene zusätzliche Bauteile und Aggregate, beispielsweise eine Ölversorgung mit Öltank, welche notwendig ist, um die Turbine im Betrieb mit der notwendigen Schmierölmenge zu versorgen. Des Weiteren umfasst eine Turbinenanlage in der Regel eine Rotordrehvorrichtung. Eine solche Rotordrehvorrichtung wird benötigt, um durch kontinuierliches Drehen des Turbinenrotors, eine gleichmäßige Temperaturverteilung beim An- und Abfahren der Turbine zu erzielen, um so eine Wellenverkrümmung zu vermeiden. Bei direkt treibenden Turbinen wird hierzu meist eine hydraulische Drehvorrichtung verwendet, die mit einem Hydromotor ausgestattet ist und über eine Verzahnung den Turbinenrotor antreibt. Bei Turbinen mit zwischengeschaltetem Getriebe wird üblicher Weise eine elektrische Drehvorrichtung an der Ritzelwelle des Getriebes angebaut. Beide Rotordrehvorrichtungen verursachen zusätzliche Kosten und erhöhen den Bauraumbedarf der Turbinenanlage.

Ziel der vorliegenden Erfindung ist es daher, eine Rotordrehvorrichtung bereitzustellen, welche kostengünstig ist und eine platzsparende Anordnung erlaubt.

Die Aufgabe wird gelöst durch die Merkmale des unabhängigen Patentanspruchs 1.

Weitere Ausgestaltungen der Erfindung, die einzeln oder in Kombination miteinander einsetzbar sind, sind Gegenstand der Unteransprüche.

Die erfindungsgemäße Turbinenanlage, umfassend wenigstens eine direkt betriebe Hauptölpumpe zur Versorgung der Turbinenanlage mit einer Schmierölmenge während des Betriebs der Turbinenanlage, sowie einer elektrischen Hilfsölpumpe zur Versorgung der Turbinenanlage mit einer Schmierölmenge während des An- und Abfahrens der Turbinenanlage, zeichnet sich dadurch aus, dass die Hauptölpumpe mittels der elektrischen Hilfsölpumpe, während des An- und Abfahrens der Turbinenanlage, mit Schmieröl beaufschlagt wird, wobei der Schmieröldruck, der von der elektrischen Hilfsölpumpe erzeugt wird, so groß ist, dass die Hauptölpumpe ein Drehmoment auf eine Turbinenwelle der Turbinenanlage überträgt, welches zum Drehen der Turbinenwelle ausreicht. Hierdurch kann auf eine zusätzliche Rotordrehvorrichtung vollständig verzichtet werden. Die Hauptölpumpe als auch die elektrische Hilfsölpumpe sind notwendige Bauteile der Turbinenanlage und somit standardmäßig vorhanden. Die elektrische Hilfsölpumpe muss lediglich mit einem höheren Öldruck beaufschlagt werden, so dass sie während des An- und Abfahrbetriebs einen hinreichenden Öldruck aufbaut, so dass die Hauptölpumpe den notwendigen Drehmoment zum Drehen der Turbinenwelle aufbauen kann. Auch wenn nachfolgend von Ölpumpen und Schmieröl gesprochen wird, so beinhaltet dies jegliche Art von Schmiermitteln, auch ölfreie Schmiermittel, die zum Schmieren der Bauteile, insbesondere der Lager der Turbinenanlage verwendbar sind.

Eine Ausgestaltung der Erfindung sieht vor, dass die Hauptölpumpe eine Rotationspumpe, insbesondere eine Kreisel- oder Schraubenspindelpumpe ist. Hierdurch kann der Öldruck in einen Drehmoment umgewandelt werden, der zum Antreiben des Turbinenrotors verwendet werden kann. Die Kreis- oder Schraubenspindelpumpe erzeugt bei geringer Drehbewegung ein hohes Drehmoment und eignet sich somit besonders gut zum Antreiben des Turbinenrotors.

Eine weitere Ausgestaltung der Erfindung sieht vor, dass die Turbinenanlage eine direkt treibende und/oder ein über ein zwischen geschaltetes Getriebe betriebene Hauptölpumpe umfasst. Für beide Turbinenarten ergibt sich durch die Einsparung der zusätzlichen Rotordrehvorrichtung eine wesentlich kompaktere Bauweise. Eine weitere Ausgestaltung der Erfindung sieht vor, dass die Beaufschlagung der Hauptölpumpe mit Öldruck, welches durch die Hilfsölpumpe bereitgestellt wird, mittels eines zwischen geschaltetem Ventils geregelt wird. Durch das zwischen geschaltete Ventil lässt sich die Turbinenanlage so steuern, dass zum An- und Abfahren der Turbine die erforderliche Schmierölmenge durch die elektrische Hilfsölpumpe bereit gestellt wird und nach Erreichen einer bestimmten Drehzahl der Turbine üblicher Weise die Nenndrehzahl die Hilfsölpumpe ausgeschaltet und die Schmierölversorgung ausschließlich durch die Hauptölpumpe erfolgen kann.

Zusammenfassend lässt sich somit feststellen, dass durch die erfindungsgemäße Beaufschlagung der Hauptölpumpe mit Öldruck, welcher mittels der elektrischen Hilfsölpumpe bereit gestellt wird, die Hauptölpumpe während des An- und Abfahrens ein Drehmoment auf die Rotorwelle der Turbinenanlage übertragen kann, welches zum Antreiben der Turbinenwelle ausreicht. Hierdurch kann auf eine zusätzliche Rotordrehvorrichtung verzichtet werden, wodurch erhebliche Kosteneinsparungen möglich sind. Der Bauraum der Turbinenanlage wird durch das Weglassen der zusätzlichen Rotordrehvorrichtung deutlich verringert. Darüber hinaus kann durch die zuvor beschriebene Erfindung ein gefahrloses Ein- und Ausschalten der so realisierten Rotordrehvorrichtung gewährleistet werden.

Nachfolgend werden die Erfindung sowie weitere Vorteile der Erfindung anhand eines Ausführungsbeispiels dargestellt. Es zeigt
Fig. 1 das Ölleitungsschema einer Turbinenanlage mit einer Getriebeturbine nach dem Stand der Technik;
Fig. 2 das Ölleitungsschema einer erfindungsgemäßen Turbinenanlage mit der Hauptölpumpe als Rotordrehvorrichtung, ebenfalls an einer Getriebeturbine.

Die Figuren zeigen eine schematische Darstellung der Erfindung.

Auch wenn die Erfindung nachfolgend an einer Getriebeturbine dargestellt wird, lässt sich die erfindungsgemäße Ausbildung der Turbinenanlage auch auf eine direkt treibende Turbine ohne Weiteres übertragen, ohne den Bereich der Erfindung zu verlassen.

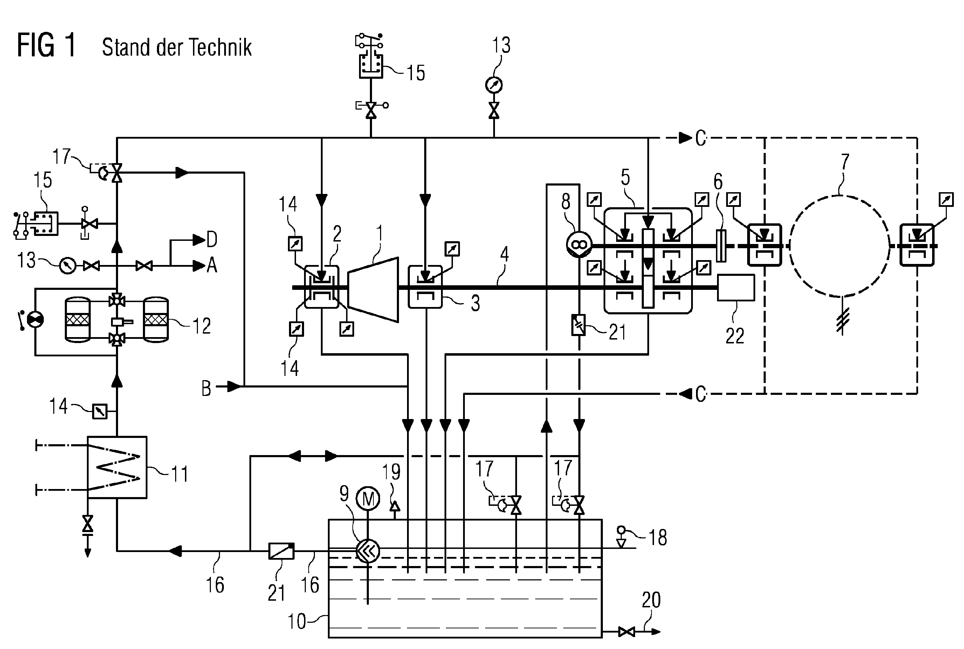

Fig. 1 zeigt ein Ölleitungsschema einer Turbine nach dem Stand der Technik. Die Turbinenanlage weist eine Turbine 1 mit mehreren in der Figur 1 nicht näher dargestellten Turbinenstufen auf. Die Turbinenstufen treiben eine Turbinenwelle 4 an, welche in einem vorderen und hinteren Lagergehäuse 2,3 gelagert sind. Die Turbinenwelle 4 ist direkt oder über eine flexible Kupplung mit einem Getriebe 5 verbunden. Das Getriebe 5 wandelt die Drehzahl der Turbine 1 in eine für einen Generator 7 geeignete Drehzahl um. Zwischen dem Getriebe 5 und dem Generator 7 ist eine Generatorkupplung 6 angeordnet. Die Getrieberäder sowie die Welle des Generators sind ebenfalls mittels Lager drehbar gelagert. Die Lager der Turbinenwelle 4 als auch die Getriebe- und Generatorenlager müssen mit einem Schmiermittel, vorzugsweise einem Schmieröl geschmiert werden. Hierzu sind üblicher Weise eine Hilfsölpumpe 9 und eine Hauptölpumpe 8 vorgesehen. Die Hilfsölpumpe 9 ist im Ausführungsbeispiel elektrisch betrieben ausgebildet. Die Hauptölpumpe 8 ist auf der Ritzelwelle des Getriebes 5 angeordnet und wird von dieser angetrieben. Die Hauptölpumpe 8 ist als direkt angetriebene Kreis- oder Schraubenspindelpumpe ausgebildet. Sowohl die Hilfsölpumpe 9 als auch die Hauptölpumpe 8 beziehen ihr Schmieröl aus einem Schmierölbehälter 10. Während des Anlaufens der Turbine 1 erfolgt die Schmierölversorgung ausschließlich über die elektrisch betriebene Hilfsölpumpe 9. Hierzu ist die elektrisch beschriebene Hilfsölpumpe 9 über Leitungen 16 mit den verschieden Lagern verbunden. Zusätzlich können weitere Bauteile in den Schmierölkreislauf eingebaut werden, wie beispielsweise ein Ölkühler 11, Ölfilter 12, Ölmanometer 13, Ölthermometer 14 sowie Druckwächter 15, welche einen Alarm auslösen und das Einschalten der Hilfsölpumpe und die Schnellschlussauslösung steuern. Zusätzlich können einstellbare Drosselblenden sowie Sicherheits- und Druckhalteventile, Ölniveauanzeigen, Entlüftungen und Entleerung sowie Rückschlussklappen vorgesehen werden. Beim Erreichen einer entsprechenden Drehzahl üblicher Weise der Nenndrehzahl der Turbine 1 wird die Schmierölversorgung durch die Hauptölpumpe 8 übernommen. Diese wird über die Ritzelwelle des Getriebes 5 beziehungsweise bei einer direkt angetriebenen Turbine unmittelbar über die Turbinenwelle 4 angetrieben. Die Hauptölpumpe 8 saugt über einen Ansaugstutzen Öl aus dem Ölbehälter 10 an und verteilt das Schmieröl über die bereits beschriebenen Schmierölleitungen an die Lager. Die elektrische Hilfsölpumpe 9 wird hierzu abgeschaltet und ein Rückfluss in die Hilfsölpumpe 8 wird durch die Rückschlagkappe 21 verhindert. Da während des An- und Abfahrens der Turbine 1 für eine gleichmäßige Temperaturverteilung, insbesondere der Turbinenwelle 4 gesorgt werden muss, um eine Wellenkrümmung zu verhindern, ist eine zusätzliche Rotordrehvorrichtung 22 notwendig. Die Rotordrehvorrichtung 22 ist hierbei auf der Ritzelwelle des Getriebes 5 oder bei einer direkt betriebenen Turbine direkt auf der Antriebswelle 4 angeordnet. Bei direkt betriebenen Turbinen, wird meist eine hydraulische Drehvorrichtung verwendet, die mit einem Hydromotor über eine Verzahnung den Motor antreibt. Bei der dargestellten Getriebeturbine wird die elektrische Drehvorrichtung an die Ritzelwelle des Getriebes angebaut.

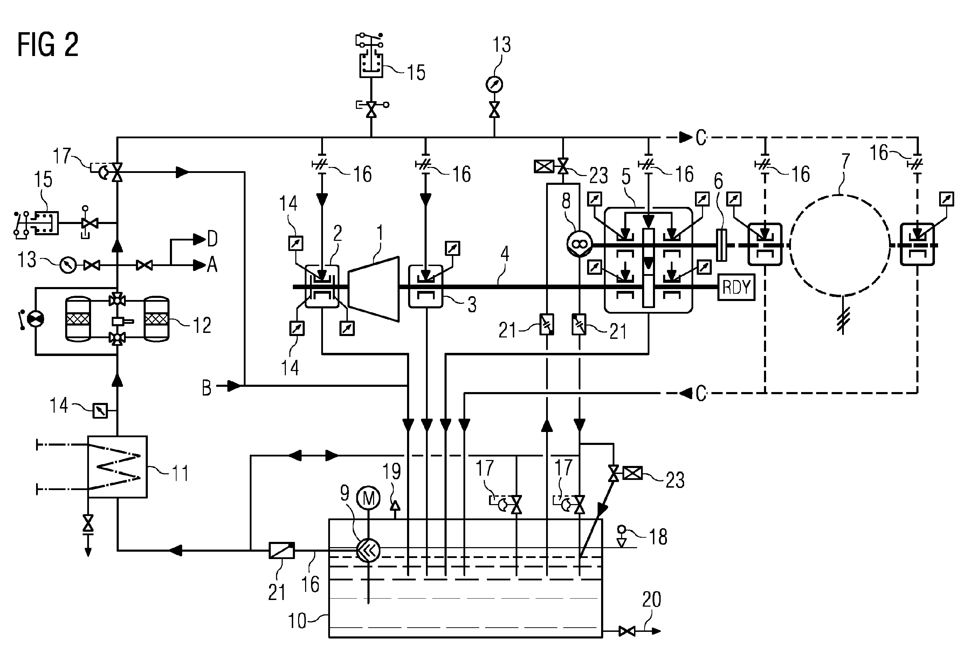

Fig. 2 zeigt das Ölleitungsschema einer erfindungsgemäßen Turbinenanlage mit einer Hauptölpumpe 8 als Rotordrehvorrichtung. Das Ölleitungsschema entspricht weitgehend dem bereits in Fig. 1 beschriebenen Ölleitungsschema, so dass an dieser Stelle auf dessen Beschreibung verwiesen wird. Zusätzlich ist eine Verbindungsleitung 23 von der elektrisch betriebenen Hilfsölpumpe 9 zur Ansaugseite der Hauptölpumpe 8 vorgesehen. In dieser Verbindungsleitung 23 ist ein Schaltventil 24 zum Öffnen oder Absperren der Verbindungsleitung 23 vorgesehen. Durch Öffnen des Schaltventils 24 kann die elektrisch betriebene Hilfsölpumpe 9 die Ansaugseite der Hauptölpumpe 8 mit einem entsprechenden Öldruck beaufschlagen. Der Öldruck sorgt dafür, dass die Hauptölpumpe 8 angetrieben und als Motor fungiert, der seinen Drehmoment an die Ritzelwelle des Getriebes 5 abgibt und diese in Bewegung versetzt. Über die Getriebewellen des Getriebes 5 wird somit auch die Antriebswelle 4 der Turbine 1 in Drehbewegung versetzt und die Antriebswelle 4 kann ohne zusätzliche Rotordrehvorrichtung während des Anund Abfahrens betrieben werden. Beim Nennbetrieb der Turbine 1 kann die elektrische Hilfsölpumpe 9 wieder ausgeschaltet und das Schaltventil 24 geschlossen werden. Die Versorgung der Lager mit Schmieröl erfolgt dann wieder ausschließlich über die Hauptölpumpe 8.

Durch die erfindungsgemäße Turbinenanlage kann somit auf sehr einfache Weise eine Rotordrehvorrichtung durch die bereits vorhandenen Hilfsölpumpen 9 und Hauptölpumpe 8 ersetzt werden. Hierdurch kann auf eine zusätzliche Rotordrehvorrichtung verzichtet werden, und es wird eine kompakte Bauweise der Turbinenanlage ermöglicht. Ein gefahrloses Ein- und Ausschalten der Rotordrehvorrichtung über die elektrisch betriebene Hilfsölpumpe und das Schaltventil, ist jederzeit möglich.

## Patentansprüche

1. Turbinenanlage, umfassend wenigstens eine direktgetriebene Hauptölpumpe zur Versorgung der Turbinenanlage mit einer Schmierölmenge während des Betriebs der Turbinenanlage, sowie einer elektrischen Hilfsölpumpe zur Versorgung der Turbinenanlage mit einer Schmierölmenge während des Anund Abfahren der Turbinenanlage,
**dadurch gekennzeichnet, dass**
die Hauptölpumpe mittels der elektrischen Hilfsölpumpe, während des An- und Abfahren der Turbinenanlage, mit Schmieröl beaufschlagbar ist, wobei der Schmieröldruck der von der elektrischen Hilfsölpumpe erzeugt wird so groß ist, dass die Hauptölpumpe ein Drehmoment auf eine Turbinenwelle der Turbinenanlage überträgt, welches zum Drehen der Turbinenwelle ausreicht.

2. Turbinenanlage nach Anspruch 1,
**dadurch gekennzeichnet, dass**
die Hauptölpumpe eine Kreisel- oder Schraubenspindelpumpe ist.

3. Turbinenanlage nach Anspruch 1 oder 2,
**dadurch gekennzeichnet, dass**
die Turbinenanlage eine direkttreibende und/ oder ein über ein zwischengeschaltetes Getriebe betrieben Turbine umfasst.

4. Turbinenanlage nach einem der Ansprüche 1 bis 3,
**dadurch gekennzeichnet, dass**
Beaufschlagung der Hauptölpumpe durch die Hilfsölpumpe mittels eines zwischengeschalteten Ventils geregelt wird.
